# EUROPÄISCHE PATENTANMELDUNG

(11) **EP 2 789 879 A1**
(43) Veröffentlichungstag der Anmeldung: **15.10.2014**
(21) Anmeldenummer: 14158696.6
(22) Anmeldetag: 11.03.2014
(51) Int. Cl.: F16H 59/68, G05B 5/00, B60W 10/10

(54) **Steuergerät zur Betätigung eines Aktors**

(30) Priorität: 11.04.2013 DE 102013206440
(71) Anmelder: ZF Friedrichshafen AG, 88038 Friedrichshafen (DE)
(72) Erfinder: Scheurer, Sven, 88090 Immenstaad (DE)

(57) **Zusammenfassung**

Steuergerät (1) zur Betätigung eines Aktors (2), das einen ersten Soll-Wertes (REQ) empfängt, einen zweiten Soll-Wertes (TGT) und einen dritten Soll-Wertes (MEM) speichert, den gespeicherten zweiten Soll-Wertes (TGT) an den Aktor (2) ausgibt, stellt in einem Schritt A mitthilfe eines Zählers (6) fest, ob eine Zeitspanne abgelaufen ist, und vergleicht den empfangenen ersten Soll-Wertes (REQ) mit dem gespeicherten dritten Soll-Wert (TGT) in einem Schritt B.

Falls festgestellt wird, dass die Zeitspanne noch nicht abgelaufen ist, und dass der erste Soll-Wert (REQ) nicht dem dritten Soll-Wert (MEM) entspricht, wird der Wert des zweiten Soll-Werts (TGT) als dritter Soll-Wert (MEM) und der Wert des ersten Soll-Werts (REQ) als zweiter Soll-Wert (TGT) abgespeichert.

Außerdem bezieht sich die Erfindung auf ein Getriebesteuergerät, ein Getriebe und ein Fahrzeugsteuersystem mit einem solchen Steuergerät.

## Beschreibung

Die Erfindung bezieht sich auf ein Steuergerät zur Betätigung eines Aktors, sowie auf ein Getriebesteuergerät, ein Getriebe und ein Fahrzeugsteuersystem, welche wie das erfindungsgemäße Steuergerät ausgeführt sind oder welche zumindest ein solches Steuergerät aufweisen.

Bei Systemen, bestehend aus zumindest zwei miteinander kommunizierenden Steuergeräten, die sich gegenseitig auf bestimmte Informationen aufsynchronisieren, gibt es Situationen, in denen es zu einem ungewollten ständig wiederkehrenden Wechsel (Toggeln) der Information in den Steuergeräten kommt. Dies ist der Tatsache geschuldet, dass bedingt durch Signallaufzeiten, Signalzykluszeiten und Signalentprellung die rückgemeldete Information zum Zeitpunkt der Verarbeitung in einem der Steuergeräte nicht mehr aktuell ist.

Aus der EP 0 701 515 B1 ist ein Verfahren zur Synchronisierung von aktualisierten Daten zwischen Steuergeräten bekannt.

Bei einem Nutzfahrzeug ist es bekannt, dass sich ein übergeordnetes Fahrzeugsteuergerät mit einem untergeordneten Getriebesteuergerät aufsynchronisiert. Das Fahrzeugsteuergerät gibt hierbei Vorgaben (Soll-Werte) eines Fahrzeugbedieners, welche es über einen Schalthebel erhält, an das Getriebesteuergerät aus. Das Getriebesteuergerät steuert in Abhängigkeit der Vorgaben (Soll-Werte) dann einen Getriebeaktor an, der das Fahrzeuggetriebe entsprechend schällt. Dies kann beispielsweise ein Rückwärtsgang oder ein Leerlauf oder einer von mehreren Vorwärtsgängen (Übersetzungsstufen) sein. Beim Synchronisieren der Steuergeräte werden die jeweils ausgegebenen Soll-Werte zyklisch untereinander ausgetauscht und gegebenenfalls aneinander angeglichen.

Hierbei kann es bei einer direkten Vorgabe einer Übersetzungsstufe von dem Fahrzeugsteuergerät an das Getriebesteuergerät vorkommen, dass zwischen den beiden Steuergeräten ein ungewollter wiederkehrender Wechsel der jeweils ausgegebenen Soll-Werte einsetzt. Für die Dauer dieses wiederkehrenden Wechsels kann keine Schaltung des Getriebes durchgeführt werden und gegebenenfalls auch keine laufende Schaltung beendet werden.

Aufgabe der Erfindung ist es daher ein Steuergerät zur Betätigung eines Aktors bereitzustellen, bei welchem es synchronisierungsbedingt seltener zu einem ungewollten ständig wiederkehrenden Wechsel des ausgegebenen Soll-Wertes kommt.

Die Aufgabe wird durch ein Steuergerät mit den Merkmalen des Anspruchs 1 gelöst. Bevorzugte Ausführungen hiervon sind den Unteransprüchen entnehmbar.

Die Erfindung umfasst zudem ein Getriebesteuergerät, das entsprechend des erfindungsgemäßen Steuergerätes ausgeführt ist, sowie ein Getriebe und ein Fahrzeugsteuersystem, jeweils ausgestattet mit einem solchen erfindungsgemäßen Steuergerät.

Demgemäß handelt es sich bei der Erfindung um ein Steuergerät zur Betätigung eines Aktors. Das Steuergerät weist zumindest ein Empfangsmittel zum Empfang eines ersten Soll-Wertes für den Aktor auf, sowie einen Informationsspeicher zum Speichern mindestens eines zweiten Soll-Wertes und eines dritten Soll-Wertes für den Aktor, sowie ein Ausgabemittel zur Ausgabe des gespeicherten zweiten Soll-Wertes an den Aktor. Des Weiteren verfügt das Steuergerät über einen Zähler zum Feststellen in einem Schritt A, ob eine Zeitspanne abgelaufen ist und ein Vergleichsmittel zum Vergleichen des von der Empfangseinheit empfangenen ersten Soll-Wertes mit dem im Informationsspeicher gespeicherten dritten Soll-Wert in einem Schritt B.

Im Rahmen des Schrittes A wird folglich festgestellt, ob und gegebenenfalls inwiefern die Zeitspanne abgelaufen ist. Im Rahmen des Schrittes B wird festgestellt, ob und gegebenenfalls inwiefern der empfangene erste Soll-Wert dem gespeicherten dritten Soll-Wert entspricht.

Bei dem ersten Soll-Wert handelt es sich insbesondere um einen gewünschten neuen Soll-Wert für den Aktor, also einen Wert oder einen Zustand, den dieser in Zukunft einnehmen soll. Bei dem zweiten Soll-Wert handelt es sich insbesondere um einen momentanen Soll-Wert, also einen Wert oder Zustand, den der Aktor momentan einnimmt oder der gerade im Begriff ist, von dem Aktor eingenommen zu werden oder der zumindest momentan vom Steuergerät für den Aktor ausgegeben wird. Bei dem dritten Soll-Wert handelt es sich insbesondere um einen unmittelbar vorhergehenden Soll-Wert, also einen Wert oder Zustand, welchen der Aktor einnahm oder im Begriff war einzunehmen, bevor er den momentanen Wert oder Zustand (den zweiten Soll-Wert) eingenommen hat oder den er gerade im Begriff ist, einzunehmen. Bei der Zeitspanne handelt es sich um einen vorgegebenen Zeitwert, der beispielsweise ebenfalls in dem Informationsspeicher fest gespeichert ist, oder der im Betrieb anhand von Kennlinien oder Formeln ermittelt wird. Die Zeitspanne kann insbesondere vorab empirisch ermittelt werden. Sie beträgt erfahrungsgemäß vorzugsweise kleiner 1 Sekunde, beispielsweise 0,5 Sekunden. Die Zeitspanne läuft in dem Zähler ab und beginnt bei einem Neustart des Zählers von neuem abzulaufen. Selbstverständlich kann jede Art zur Ermittlung, ob eine Zeitspanne abgelaufen ist, hier eingesetzt werden, beispielsweise ein Count-Down oder ein Vergleich zwischen einer Startuhrzeit mit einer momentanen Uhrzeit.

Das Steuergerät ist so ausgeführt, dass falls in dem Schritt A festgestellt wird, dass die Zeitspanne noch nicht abgelaufen ist und zudem in dem Schritt B festgestellt wird, dass der erste Soll-Wert dem gespeicherten dritten Soll-Wert nicht entspricht (also der erste Soll-Wert ungleich dem gespeicherten dritten Soll-Wert ist), dann in einem Schritt C der Wert des zweiten Soll-Werts als (neuer) dritter Soll-Wert in dem Informationsspeicher abgespeichert wird und der Wert des ersten Soll-Werts als (neuer) zweiter Soll-Wert in dem Informationsspeicher abgespeichert wird.

Somit findet erst dann ein Wechsel des an den Aktor über das Ausgabemittel ausgegebenen zweiten Soll-Wertes statt, wenn die im Schritt A und B abgeprüften Bedingungen erfüllt sind. Da es sich bei dem an den Aktor ausgegebenen Soll-Wert auch gleichzeitig um denjenigen Wert handelt, auf den sich ein möglichweise vorhandenes zweites Steuergerät auf synchronisiert, kommt es durch die zwangsläufige Prüfung der genannten Bedingungen wesentlich seltener zu dem ungewollten ständigen Wechsel. Innerhalb der Zeitspanne ist ein ungewollter ständiger Wechsel in dem Steuergerät sogar ausgeschlossen.

Bevorzugt ist das Vergleichsmittel außerdem zum Vergleichen des ersten Soll-Wertes mit dem im Informationsspeicher gespeicherten zweiten Soll-Wert in einem Schritt D ausgeführt, wobei das Steuergerät dann so ausgeführt ist, dass der Schritt C erst dann ausgeführt wird, wenn zuvor in dem Schritt D festgestellt wurde, dass der erste Soll-Wert nicht dem gespeicherten zweiten Soll-Wert entspricht, also wenn eine Abweichung zwischen dem ersten und zweiten Soll-Wert besteht. Hierdurch wird vermieden, dass falls der erste und zweite Soll-Wert identisch sind, unnötige Speicher- und Rechenoperationen in dem Steuergerät durchgeführt werden. Zudem kann ein dauerhaftes ungewolltes ständiges Wechseln in dem Steuergerät verhindert werden.

Die zeitliche Reihenfolge zur Durchführung des Schrittes A und B und gegebenenfalls des Schrittes D ist untereinander beliebig vertauschbar. Mit anderen Worten kann vor Durchführung des Schrittes C beispielsweise zunächst der Schritt D und dann der Schritt A und dann der Schritt B erfolgen, oder es kann zunächst der Schritt B vor dem Schritt A und dann dem Schritt D erfolgen, etc. Es hat sich allerdings als vorteilhaft erwiesen, wenn zuerst der Schritt A, dann der Schritt B und dann erst gegebenenfalls der Schritt D ausgeführt wird, bevor letztlich der Schritt C ausgeführt wird.

Bevorzugt ist das Steuergerät zudem so ausgeführt, dass in einem Schritt E, der insbesondere zeitlich unmittelbar dem Schritt C folgt, das Ausgabemittel den zweiten Soll-Wert an den Aktor ausgibt. Außerdem wird bevorzugt in einem Schritt F, der insbesondere zeitlich unmittelbar dem Schritt C oder E folgt, der Zähler neu gestartet. Schritt F kann im Übrigen auch zeitlich unmittelbar vor oder gleichzeitig zu Schritt C oder E folgen.

Zweckmäßig ist es, dass falls in dem Schritt A festgestellt wird, dass die Zeitspanne bereits abgelaufen ist, der Schritt C ausgeführt wird. Um festzustellen, ob dann überhaupt eine Änderung der abgespeicherten Soll-Werte notwendig ist und um dauerhaftes ungewolltes Wechseln des zweiten Sol-Wertes zu verhindern, kann vor Durchführung des Schrittes C noch der Schritt D ausgeführt werden und erst wenn tatsächlich festgestellt wird, dass der erste Soll-Wert nicht dem gespeicherten zweiten Soll-Wert entspricht, der Schritt C folgen.

In einer Weiterbildung weist das Steuergerät ein Mittel auf zum Feststellen in einem Schritt G, ob der erste Soll-Wert einem Ausnahmewert entspricht, wobei falls das Mittel dann feststellt, dass der erste Soll-Wert dem Ausnahmewert entspricht, der Schritt C durchgeführt wird, insbesondere zeitlich unmittelbar anschließend. Auch hier kann vor Durchführung des Schrittes C zunächst der Schritt D erfolgen, um festzustellen, ob überhaupt eine Änderung der abgespeicherten Soll-Werte notwendig ist. Dies ist nur der Fall, wenn der erste Soll-Wert nicht dem gespeicherten zweiten Soll-Wert entspricht. Grundsätzlich können einer oder mehrere Ausnahmewerte vorgesehen sein.

Durch das Vorsehen eines oder mehrerer Ausnahmewerten können priorisierte Schaltzustände des Aktors (Soll-Werte) definiert werden, welche sofort an den Aktor ausgegeben werden. Hierbei kann es sich beispielweise um Zustände handeln, die dieser in Notfällen einlegen soll. Sofern das Steuergerät als Getriebesteuergerät eingesetzt wird, kann es sich bei einem solchen Ausnahmewert insbesondere um einen Soll-Wert für den Aktor handeln, durch welchen er einen Getriebeleerlauf einlegt oder durch welchen er von einem Vorwärtsgang des Getriebes in einen Rückwärtsgang oder umgekehrt wechselt.

In einer Weiterbildung weist das Steuergerät ein Mittel auf, zum Feststellen in einem Schritt H, ob sich der vom Empfangsmittel empfangene erste Soll-Wert geändert hat, beispielsweise ob sich der Zustand des Signals für den ersten Soll-Wert geändert hat. Dies kann beispielsweise durch Erkennung einer Signalflanke im Signal für den ersten Soll-Wert erfolgen. Das Steuergerät ist dann so ausgeführt, dass zumindest der Schritt A und/oder Schritt B und/oder der Schritt D und/oder Schritt G erst dann ausgeführt werden, wenn das Mittel eine Änderung des ersten Soll-Werts feststellt. Dies spart Rechenkapazität in dem Steuergerät, da dann nicht ständig die Abfragen in den Schritten A, B, D und/oder G ausgeführt werden müssen.

Bevorzugt handelt es sich bei dem erläuterten erfindungsgemäßen Steuergerät um ein Getriebesteuergerät. Hierbei entspricht der erste, zweite und dritte Soll-Wert jeweils einem Schaltzustand eines von dem Getriebesteuergerät im Betrieb angesteuerten Getriebes beziehungsweise einer Schaltstellung des Aktors, der den entsprechenden Schaltzustand des Getriebes bewirkt. Bei dem Soll-Wert handelt es sich, wenn das Steuergerät für ein mehrstufiges Fahrzeuggetriebe ausgeführt ist, daher beispielsweise um eine spezifische Gang- bzw. Übersetzungsstufe des Getriebes, wie "Rückwärtsgang", "Leerlauf", "erster Vorwärtsgang", "zweiter Vorwärtsgang" etc. Bei anderen Getriebearten, beispielsweise einem Sperrdifferentialgetriebe, handelt es sich bei dem Soll-Wert um einen entsprechend anderen getriebespezifischen Befehl, wie beispielsweise "Differential sperren" oder "Differential entsperren".

Die Erfindung umfasst auch ein Getriebe mit zumindest dem obig erläuterten Getriebesteuergerät und einem Getriebeaktor, der so ausgeführt ist, dass er das Getriebe in einen Schaltzustand bringt, der dem vom Getriebesteuergerät ausgegebenen zweiten Soll-Wert entspricht.

Die Erfindung umfasst auch ein Fahrzeugsteuersystem mit zumindest einem ersten Steuergerät, das wie obig erläutert erfindungsgemäß ausgeführt ist, und mit einem zweiten Steuergerät, das ausgeführt ist eine Vorgabe eines Fahrzeugbedieners in einen Soll-Wert, welcher der Vorgabe des Fahrzeugbedieners entspricht, umwandeln und diesen Soll-Wert im Sinne des ersten Soll-Wertes an das erste Steuergerät auszugeben. Hierbei ist vorzugsweise vorgesehen, dass das erste und das zweite Steuergerät so ausgeführt sind, dass diese sich die jeweils ausgegebenen Soll-Werte gegenseitig aufsynchronisieren. Die im ersten Steuergerät vorgesehenen und erläuterten Maßnahmen reduzieren dabei die Gefahr eines ungewollten ständigen Wechsels der einander aufsynchronisierten Soll-Werte.

In einer bevorzugten Ausführung hiervon ist das zweite Steuergerät ein Fahrzeugsteuergerät, welches mit einem zu dem Fahrzeugsteuersystem gehörenden elektronischen Schalthebel verbunden ist, über welchen der Fahrzeugbediener eine gewünschte Übersetzungsstufe für ein mehrstufiges Fahrzeuggetriebe vorgeben kann. Dabei wandelt das zweite Steuergerät die gewünschte Übersetzungsstufe in einen Soll-Wert um und gibt diesen im Sinne des ersten Soll-Wertes an das erste Steuergerät aus, welches dann als Getriebesteuergerät zur Steuerung eines Fahrzeuggetriebes ausgeführt ist. Das zweite Steuergerät synchronisiert sich hierbei insbesondere auf den zweiten Soll-Wert des ersten Steuergerätes auf.

Im Folgenden wird die Erfindung anhand von Beispielen und Zeichnungen näher erläutert, aus welchen weitere vorteilhafte Ausgestaltungen und Merkmale der Erfindung entnommen werden können. Es zeigen jeweils in schematischer Darstellung,
- Fig. 1: ein Steuergerät,
- Fig. 2: ein Fahrzeugsteuersystem für einen Fahrzeugantriebsstrang,
- Fig. 3: ein Ablaufdiagramm der in einem Steuergerät gemäß Fig. 1 ablaufenden Schritte.

In den Figuren sind gleiche oder zumindest funktionsgleiche Bauteile jeweils mit gleichen Bezugszeichen versehen.

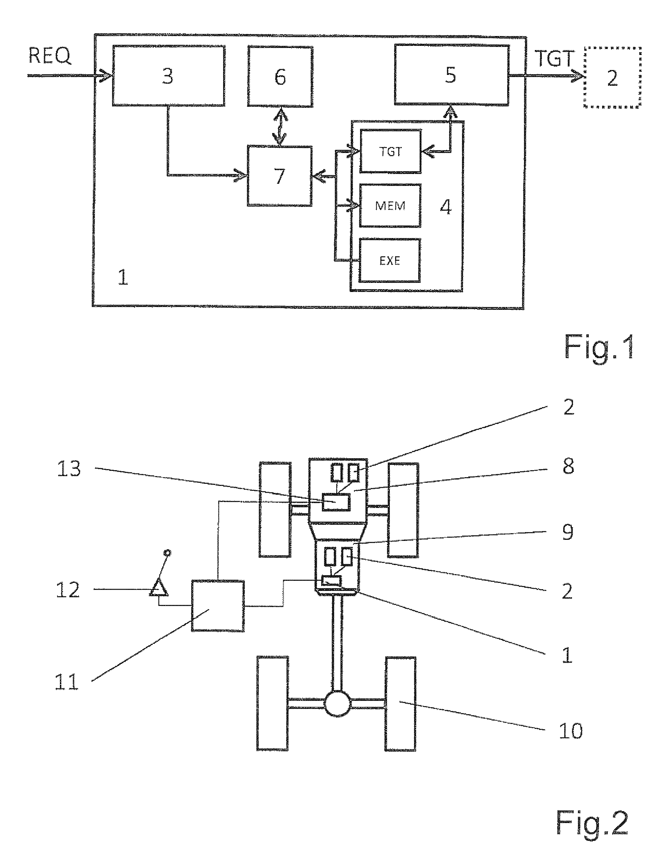

Fig. 1 zeigt ein erfindungsgemäßes Steuergerät 1 zur Betätigung eines Aktors 2. Das Steuergerät 1 verfügt über ein Empfangsmittel 3 zum Empfang eines ersten Soll-Wertes REQ für den Aktor 2 und über einen Informationsspeicher 4 zum Speichern zumindest eines zweiten Soll-Wertes TGT und eines dritten Soll-Wertes MEM für den Aktor 2. Der erste Soll-Wert REQ ist ein neu angeforderter Soll-Wert, also ein Soll-Wert, welchen der Aktor 2 in unmittelbarer Zukunft stellen soll. Der zweite Soll-Wert TGT ist ein aktuell an den Aktor ausgegebener Soll-Wert, also ein Soll-Wert, den der Aktor 2 gerade im Begriff ist einzustellen oder der gerade vom Aktor 2 eingestellt ist. Und der dritte Soll-Wert MEM ist ein unmittelbar vorhergehender Soll-Wert, also ein Soll-Wert, der zeitlich unmittelbar vor dem zweiten Soll-Wert TGT an den Aktor 2 ausgegeben wurde. Zur Ausgabe des zweiten Soll-Wertes TGT an den Aktor 2 weist das Steuergerät 1 außerdem ein Ausgabemittel 5 auf. Und es weist ein Vergleichsmittel 7 sowie einen Zähler auf 6. Der Zähler 6 kann feststellen, ob und gegebenenfalls inwiefern eine Zeitspanne seit einem Neustart des Zählers 6 abgelaufen ist. Die Zeitspanne ist fest vorgegeben oder wird anhand vorgegebener Parameter und/oder Kennlinien und/oder Formeln dynamisch ermittelt. Die Zeitspanne beziehungsweise die zur Ermittlung benötigten Kennlinien oder Formeln können in dem Informationsspeicher 4 hinterlegt sein.

Das Vergleichsmittel 7 kann feststellen ob und gegebenenfalls inwiefern der erste Soll-Wert REQ dem gespeicherten dritten Soll-Wert MEM entspricht. Außerdem kann das Vergleichsmittel 7 feststellen ob und gegebenenfalls inwiefern der erste Soll-Wert REQ dem gespeicherten zweiten Soll-Wert TGT entspricht.

Bei dem Empfangsmittel 3 und Ausgabemittel 5 kann es sich beispielsweise um eine Datenbus-Schnittstelle handeln. Beim Informationsspeicher kann es sich beispielsweise um einen Digitalspeicher handeln. Dieser kann flüchtig oder dauerhaft ausgeführt sein.

Das Steuergerät 1 kann grundsätzlich als Steuerung für den Aktor 2 dienen, wobei dieses den Soll-Wert TGT lediglich an den Aktor 2 ausgibt, ohne Kontrolle, ob dieser den Wert auch tatsächlich einstellt. Oder das Steuergerät 1 kann grundsätzlich als Regelung für den Aktor 2 dienen, wobei dieses den tatsächlich an dem Aktor 2 anliegenden Ist-Wert erkennt und diesen so lange nachregelt, bis der Ist-Wert dem geforderten Soll-Wert TGT entspricht.

Das Steuergerät 1 ist so ausgeführt, dass es den momentan gespeicherten Wert des zweiten Soll-Wertes TGT als neuen dritten Soll-Wert MEM in dem Informationsspeicher 4 abspeichert (und hierbei den alten Soll-Wert MEM beispielsweise überschreibt oder in einer Historie archiviert) und den eingegangenen Wert des ersten Soll-Wertes REQ als neuen zweiten Soll-Wert TGT in dem Informationsspeicher 4 abspeichert (und hierbei den alten Soll-Wert TGT beispielsweise überschreibt oder in einer Historie archiviert), wenn mindestens die folgenden zwei Bedingungen zusammen erfüllt sind. Erstens muss festgestellt werden, dass die Zeitspanne im Zähler 6 noch nicht abgelaufen ist und Zweitens muss festgestellt werden, dass der erste Soll-Wert REQ dem gespeicherten dritten Soll-Wert MEM nicht entspricht (also ungleich ist). Das Steuergerät ist demnach ausgeführt, diese Feststellungen zu machen.

In der in Fig. 1 dargestellten beispielhaften Ausführung wird von dem Empfangsmittel 3 der erste Soll-Wert REQ empfangen und an das Vergleichsmittel 7 weitergeleitet. Das Vergleichsmittel 7 prüft dann zumindest, ob der erste Soll-Wert REQ ungleich dem abgespeicherten dritten Soll-Wert MEM ist oder ob zumindest hinreichend große Unterschiede zwischen diesen bestehen. Der Zähler 6 prüft dann, ob die Zeitspanne abgelaufen ist und leitet das Ergebnis der Prüfung an das Vergleichsmittel 7 weiter. Diese Prüfungen können zeitlich parallel oder in beliebiger Reihenfolge hintereinander erfolgen. Falls feststeht, dass der erste Soll-Wert REQ nicht dem abgespeicherten dritten Soll-Wert MEM entspricht und die Zeitspanne noch nicht abgelaufen ist, hinterlegt das Vergleichsmittel 7 den Wert des zweiten Soll-Wertes TGT als neuer dritter Soll-Wert MEM im Informationsspeicher 4. Außerdem hinterlegt das Vergleichsmittel 7 dann den Wert des ersten Soll-Wertes REQ als neuer zweiter Soll-Wert TGT im Informationsspeicher 4. Der nun neu hinterlegte zweite Soll-Wert TGT wird aus dem Informationsspeicher 4 an das Ausgabemittel 5 weitergeleitet. Von dort gelangt es zu dem Aktor 2 außerhalb des Steuergeräts 1, der die entsprechende Schaltstellung beziehungsweise den entsprechenden Zustand einnimmt. Demnach erhält der Aktor 2 immer nur den im Informationsspeicher 4 hinterlegten zweiten Soll-Wert TGT. Außerdem wird dann vorzugsweise der Zähler 6 neu gestartet, d.h. die Zeitspanne beginnt von neuem abzulaufen.

Es kann optional vorgesehen sein, dass das Vergleichsmittel 7 oder ein anderes Mittel des Steuergeräts 1 außerdem prüft, ob der erste Soll-Wert REQ dem gespeicherten zweiten Soll-Wert TGT entspricht und letzteren erst dann ändert, wenn diese Soll-Werte REQ, TGT ungleich sind. Somit werden unnötige Speicher- und Rechenoperationen in dem Steuergerät 1 vermieden, wenn die Soll-Werte REQ, TGT gleich sind. Zudem kann ein dauerhaftes ungewolltes Wechseln des ausgegebenen zweiten Soll-Wertes TGT verhindert werden.

Es kann zudem optional vorgesehen sein, dass das Vergleichsmittel 7 oder ein anderes Mittel des Steuergeräts 1 zuerst prüft, ob eine Änderung des ersten Soll-Wertes REQ stattgefunden hat und die obig erläuterten Schritte erst dann stattfinden, wenn dort tatsächlich eine Änderung vorliegt. Somit werden unnötige Speicher- und Rechenoperationen in dem Steuergerät 1 vermieden, wenn keine Änderung des Soll-Werte REQ stattfand.

Es kann zudem optional vorgesehen sein, dass das Vergleichsmittel 7 oder ein anderes Mittel des Steuergeräts 1 prüft, ob der erste Soll-Wert REQ einem Ausnahmewert EXE entspricht. Falls dem so ist, kann dann vorgesehen sein, dass das Vergleichsmittel 7 oder das andere Mittel des Steuergeräts 1 den Wert des zweiten Soll-Wertes TGT sofort oder nach weiteren Prüfungen als neuen dritten Soll-Wert MEM im Informationsspeicher 4 hinterlegt. Außerdem hinterlegt das Vergleichsmittel 7 oder das andere Mittel des Steuergeräts 1 dann sofort oder nach weiteren Prüfungen den Wert des ersten Soll-Wertes REQ, also des Ausnahmewertes EXE, als neuen zweiten Soll-Wert TGT im Informationsspeicher 4. Welche Werte Ausnahmewerte EXE darstellen, kann im Informationsspeicher 4 fest hinterlegt sein (wie in Fig. 1 dargestellt) oder dynamisch ermittelt werden, beispielsweise mittels Kennlinien und/oder Formeln.

Es kann optional vorgesehen sein, dass falls festgestellt wird, dass die Zeitspanne im Zähler 6 bereits abgelaufen ist, das Vergleichsmittel 7 oder ein anderes Mittel des Steuergeräts 1 den Wert des zweiten Soll-Wertes TGT sofort oder nach weiteren Prüfungen als neuen dritten Soll-Wert MEM im Informationsspeicher 4 hinterlegt. Außerdem hinterlegt das Vergleichsmittel 7 oder das andere Mittel des Steuergeräts 1 dann sofort oder nach weiteren Prüfungen den Wert des ersten Soll-Wertes REQ als neuen zweiten Soll-Wert TGT im Informationsspeicher 4.

Fig. 2 zeigt eine Draufsicht auf einen Fahrzeugantriebsstrang, welcher mit einem erfindungsgemäßen Fahrzeugsteuersystem ausgestattet ist.

Der Antriebsstrang verfügt über einen Antriebsmotor 8, beispielsweise einen Verbrennungsmotor und/oder einen Elektromotor, ein Fahrzeuggetriebe 9 und Fahrzeugräder 10, welche mit dem Fahrzeuggetriebe 9 in bekannter Weise über Antriebswellen antriebstechnisch verbunden sind und hierdurch von dem Antriebsmotor 8 angetrieben werden. Bei dem Fahrzeug handelt es sich insbesondere um einen Personen- oder Lastkraftwagen. Der Antriebsmotor 8 wird von einem Motorsteuergerät 13 angesteuert, im Sinne von gesteuert oder geregelt. Das Motorsteuergerät 13 ist insbesondere Teil des Fahrzeugsteuersystems. Über das Motorsteuergerät 13 werden Aktoren 2 des Antriebsmotors 8 angesteuert im Sinne von geregelt und/oder gesteuert, welche die zur Bereitstellung des Antriebsmoments erforderlichen Einstellungen am Verbrennungsmotor 8 vornehmen, beispielsweise eine Drosselklappe oder Einspritzventile einstellen. Das Motorsteuergerät 13 ist bevorzugt entsprechend des in Fig. 1 gezeigten Steuergeräts 1 ausgeführt.

Das Fahrzeuggetriebe 9 ist als mehrstufiges Getriebe ausgeführt. Es kann daher unterschiedliche Gang- bzw. Übersetzungsstufen zwischen einem antriebsmotorseitigen Getriebeeingang und einem radseitigen Getriebeausgang bereitstellen. Das Getriebe 9 weist einen oder mehrere Aktoren 2 auf, welche eine der möglichen Übersetzungsstufen in dem Getriebe 9 einstellen/einlegen. Bei dem Fahrzeuggetriebe 9 handelt es sich daher insbesondere um ein im Fahrzeuggetriebebau bekanntes automatisiertes Schaltgetriebe oder Automatikgetriebe oder stufenloses Getriebe. Der oder die Aktoren 2 des Getriebes 9 werden von einem Getriebesteuergerät 1, welches entsprechend des in Fig. 1 gezeigten Steuergeräts 1 ausgeführt ist, angesteuert, im Sinne von gesteuert oder geregelt. Das Getriebesteuergerät 1 ist Teil des Fahrzeugsteuersystems.

Das Fahrzeugsteuersystem weist neben dem Getriebesteuergerät 1 und gegebenenfalls dem Motorsteuergerät 13 ein übergeordnetes Fahrzeugsteuergerät 11, auch Leitrechner genannt, auf. Dieses empfängt Signale im Sinne von Vorgaben oder Soll-Werte einer oder mehreren Benutzerschnittstellen 12 (Human Maschine Interfaces, HMI). In Fig. 2 ist eine solche Benutzerschnittstelle 12 beispielhaft als bekannter Schalthebel zur Vorgabe der gewünschten Übersetzungsstufe (=Soll-Wert) des Getriebes 9 für einen Fahrzeugbediener dargestellt. Eine andere Benutzerschnittstelle wäre beispielsweise ein bekanntes Fahrpedal für den Fahrzeugbediener zur Vorgabe des gewünschten Antriebsdrehmoments, das von dem Antriebsmotor 8 bereitgestellt werden soll (=Soll-Wert). Weitere Benutzerschnittstelle wären beispielsweise ein oder mehrere Hebel, Drehräder, Druckknöpfe, Pedale etc. für den Fahrzeugbediener zur Vorgabe einer gewünschten Bremsverzögerung des Fahrzeugs oder zur Vorgabe einer gewünschten Schaltstellung einer Differentialsperre oder zur Vorgabe von gewünschten Einstellungen einer Klimaanlage, etc. Es können daher noch weitere Steuergeräte vorgesehen sein, welche entsprechend der in Fig. 1 gezeigten Steuergeräte 1, 13 ausgeführt sind und welche die Vorgaben des Fahrzeugbenutzers an entsprechende Aktoren 2 weiterleiten.

Das Fahrzeugsteuergerät 11 wandelt die von der Benutzerschnittstelle(n) 12 empfangenen Signale in Soll-Werte für dasjenige der Steuergeräte 1, 13 um, das die spezifische Vorgabe des Fahrzeugbenutzers umsetzen soll. Das Fahrzeugsteuergerät 11 leitet die Soll-Werte daher an das entsprechende Steuergerät 1, 13 weiter. So werden beispielsweise Soll-Werte, die auf Signale des Schalthebels 12 zurückgehen, an das Getriebesteuergerät 1 weitergeleitet oder Soll-Werte, die auf Signale eines Fahrpedals zurückgehen, an das Motorsteuergerät 13 weitergeleitet. Nicht gezeigt ist, dass die Steuergeräte 1, 13 untereinander ebenfalls verknüpft sein können. Hierdurch kann das Getriebesteuergerät 1 direkt auf das Motorsteuergerät 13 zugreifen, um beispielsweise das vom Antriebsmotor 8 bereitgestellte Antriebsdrehmoment für einen Wechsel der Übersetzungsstufe kurzzeitig zu verringern. Auf der anderen Seite kann dann das Motorsteuergerät 13 direkt auf das Getriebesteuergerät 1 zugreifen, um beispielsweise einen Wechsel in eine Übersetzungsstufe auslösen, die erforderlich ist, um das vom Fahrzeugbediener geforderte Antriebsdrehmoment bereitzustellen.

Die Weiterleitung der Signale und Soll-Werte im Fahrzeugsteuersystem kann beispielsweise über ein Bussystem, wie CAN-Bus, oder ein sonstiges anderes Übertragungssystem des Fahrzeugsteuersystem drahtgebunden oder drahtlos erfolgen.

Die Steuergeräte 1, 13 synchronisieren sich regelmäßig mit dem Fahrzeugsteuergerät 11 auf. Hierbei tauschen die Steuergeräte 1, 13 mit dem Fahrzeugsteuergerät 11 die an dem jeweiligen Ausgang anliegenden Soll-Werte aus, wobei sie sich gegenseitig aktualisieren, falls es Abweichungen gibt. Die Ausführung der Steuergeräte 1, 13 im Sinne der Erfindung (Fig. 1) verringert nun die Wahrscheinlichkeit, dass es bei der Synchronisierung zu einem (ungewollten) ständig wiederkehrenden Wechsel (Toggeln) der ausgegebenen Soll-Werte kommt. Ein Wechsel des ausgegebenen Soll-Wertes TGT findet nämlich erst dann statt, wenn entweder die Zeitspanne des Zählers abgelaufen ist oder, sofern die Zeitspanne noch nicht abgelaufen ist, wenn der neu geforderte Soll-Wert REQ unterschiedlich, also ungleich zu einem unmittelbar zuvor eingestellten Soll-Wert MEM ist.

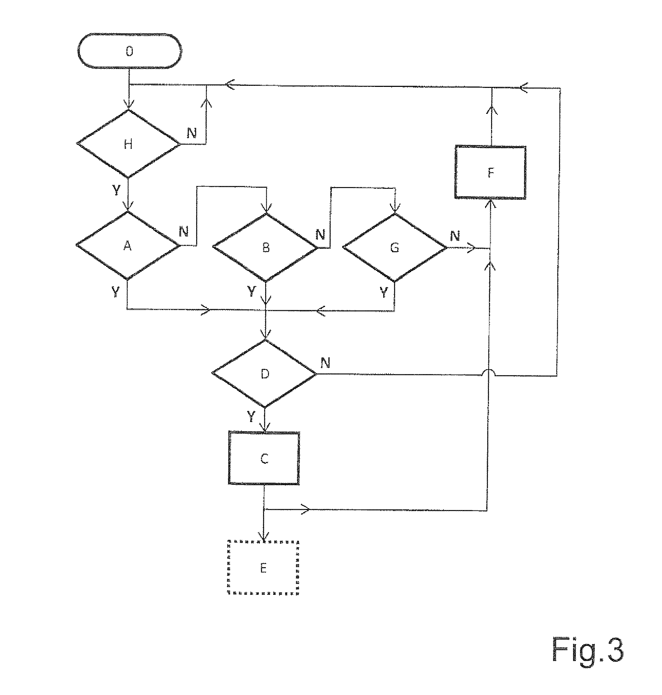

Fig. 3 zeigt einen bevorzugten Ablauf der Prüfungen und sonstigen Aktionen, die in dem erfindungsgemäßen Steuergerät ablaufen, beispielsweise dem Steuergerät 1 aus Fig. 1 oder 2. Es sei angemerkt, dass einige der in Fig. 3 aufgezeigten Schritte in alternativen Ausführungen entfallen oder in dem Ablauf untereinander ausgetauscht werden können. Insbesondere die Schritte D und/oder H undloder G können entfallen. Insbesondere die Schritte A und/oder B und/oder D und/oder G können untereinander ausgetauscht werden. Bei einem Austausch der Schritte wird bildlich gesprochen lediglich der Buchstabe in der jeweiligen Box in Fig. 1 vertauscht. Die Konsequenz eines Entfalls des Schrittes wird im Folgenden an entsprechender Stelle erläutert.

Der Schritt 0 stellt den Beginn des Ablaufs dar, wobei zu diesem Zeitpunkt der Zähler 6 noch nicht gestartet ist und der Informationsspeicher 4 leer ist. Dieser Zustand tritt beispielsweise bei einem vollständigen Reset des Steuergerätes auf. Bei Inbetriebnahme des Steuergeräts 1 wird der Zähler 6 dann neu gestartet und zu Schritt H übergegangen.

Im Schritt H wird geprüft, ob eine Änderung des ersten Soll-Wertes REQ stattgefunden hat. Ist dies nicht der Fall (Pfad N) wird Schritt H solange wiederholt, bis eine Änderung des ersten Soll-Wertes REQ festgestellt wird. Dies kann in Fig. 2 beispielsweise der Fall sein, wenn von dem Fahrzeugsteuergerät 11 ein neuer Soll-Wert REQ an das Steuergerät 1 übermittelt wird, der sich von dem bisher übermittelten Soll-Wert unterscheidet. Sobald in Schritt H eine Änderung des ersten Soll-Wertes REQ festgestellt wird (Pfad Y), wird zu Schritt A fortgeschritten. Falls Schritt H entfällt, wird direkt nach Inbetriebnahme des Steuergerätes 1 zu Schritt A fortgeschritten.

In Schritt A wird geprüft, ob die Zeitspanne des Zählers 6 abgelaufen ist. Ist dies der Fall (Pfad Y) wird zu Schritt D fortgeschritten. Ist dies nicht der Fall (Pfad N) wird zu Schritt B fortgeschritten. In Schritt B wird geprüft, ob der erste Soll-Wert REQ dem abgespeicherten dritten Soll-Wert MEM nicht entspricht, also die Werte REQ, MEM ungleich zueinander sind. Ist dies der Fall (Pfad Y), also wenn die Werte REQ, MEM hinreichend ungleich sind, wird zu Schritt D fortgeschritten. Ist dies nicht der Fall (Pfad N), also wenn die Werte REQ, MEM hinreichend gleich sind, wird zu Schritt G fortgeschritten. Falls Schritt G entfällt wird stattdessen direkt zu Schritt F fortgeschritten. In Schritt G wird geprüft, ob der erste Soll-Wert REQ einem Ausnahmewert EXE entspricht. Ist dies der Fall (Pfad Y) wird zu Schritt D fortgeschritten. Ist dies nicht der Fall (Pfad N) wird zu Schritt F fortgeschritten. In Schritt F wird der Zähler 6 neu gestartet und dann zu Schritt H zurückgekehrt. Der Ablauf startet nun von neuem.

In Schritt D wird geprüft, ob eine Abweichung zwischen dem ersten Soll-Wert REQ und dem zweiten Soll-Wert besteht, d.h. ob der Wert REQ dem Wert TGT nicht entspricht. Falls dies der Fall ist (Pfad Y), also eine Abweichung festgestellt wurde, wird zu Schritt C fortgeschritten. Falls dies nicht der Fall ist (Pfad N), also keine Abweichung festgestellt wurde, wird zu Schritt H zurückgekehrt. Der Ablauf startet nun von neuem, allerdings ohne Neustart des Zählers 6. Falls Schritt D entfällt wird stattdessen direkt zu Schritt C fortgeschritten.

In Schritt C wird der Wert des zweiten Soll-Werts TGT als neuer dritter Soll-Wert MEM in dem Informationsspeicher 4 abgespeichert und der Wert des ersten Soll-Wert REQ als neuer zweiter Soll-Wert TGT in dem Informationsspeicher 4 abgespeichert. Der neue zweite Soll-Wert TGT steht nun für den Aktor 2 und das Fahrzeugsteuergerät 11 im Informationsspeicher 4 zum Abruf bereit. Anschließend wird zu Schritt F fortgeschritten, in welchem der Zähler 6 neu gestartet wird. Optional kann an Schritt C anschließend zu Schritt E fortgeschritten werden, in welchem der neue zweite Soll-Wert TGT, der nun dem ersten Soll-Wert REQ entspricht, an den Aktor 2 und/oder das Fahrzeugsteuergerät 11 aktiv gesendet wird.

Die Abfragen innerhalb der in Fig. 3 gezeigten Schritte laufen in der dargestellten Reihenfolge bevorzugt zeitlich unmittelbar hintereinander ab. Einige oder alle der in den Schritten A, B, D, G, H durchgeführten Abfragen können zur Zeitersparnis allerdings auch parallel ablaufen. Die Aktionen, welche das Steuergerät 1 im Bezug auf Abspeichern und Ausgeben der Soll-Werte REQ, TGT und MEM ausführt, beispielsweise das Abspeichern des Wertes des ersten Soll-Wertes REQ als neuer zweiter Soll-Wert TGT, hängen allerdings immer wie in Fig. 3 gezeigt von den jeweiligen Ergebnissen der Abfragen ab.

### Bezugszeichen

- 1: (Getriebe-)Steuergerät
- 2: Aktor
- 3: Empfangsmittel
- 4: Informationsspeicher
- 5: Ausgabemittel
- 6: Zähler
- 7: Vergleichsmittel
- 8: Fahrzeugantriebsmotor
- 9: Fahrzeuggetriebe
- 10: Fahrzeugrad
- 11: Fahrzeugsteuergerät
- 12: Benutzerschnittstelle; Schalthebel
- 13: Motorsteuergerät

## Patentansprüche

1. Steuergerät (1) zur Betätigung eines Aktors (2), mit zumindest
einem Empfangsmittel (3) zum Empfang eines ersten Soll-Wertes (REQ) für den Aktor,
einem Informationsspeicher (4) zum Speichern mindestens eines zweiten Soll-Wertes (TGT) und eines dritten Soll-Wertes (MEM) für den Aktor,
einem Ausgabemittel (5) zur Ausgabe des gespeicherten zweiten Soll-Wertes (TGT) an den Aktor (2),
einem Zähler (6) zum Feststellen in einem Schritt A, ob eine Zeitspanne abgelaufen ist, **gekennzeichnet durch**,
ein Vergleichsmittel (7) zum Vergleichen des von der Empfangseinheit (3) empfangenen ersten Soll-Wertes (REQ) mit dem im Informationsspeicher (4) gespeicherten dritten Soll-Wert (TGT) in einem Schritt B,
wobei das Steuergerät (1) so ausgeführt ist, dass falls in dem Schritt A festgestellt wird, dass die Zeitspanne noch nicht abgelaufen ist und in dem Schritt B festgestellt wird, dass der erste Soll-Wert (REQ) nicht dem gespeicherten dritten Soll-Wert (MEM) entspricht,
in einem Schritt C der Wert des zweiten Soll-Werts (TGT) als dritter Soll-Wert (MEM) in dem Informationsspeicher (4) abgespeichert wird und der Wert des ersten Soll-Werts (REQ) als zweiter Soll-Wert (TGT) in dem Informationsspeicher (4) abgespeichert wird.

2. Steuergerät (1) nach Anspruch 1, wobei das Vergleichsmittel (7) außerdem zum Vergleichen des von der Empfangseinheit (3) empfangenen ersten Soll-Wertes (REQ) mit dem im Informationsspeicher (4) gespeicherten zweiten Soll-Wert (TGT) in einem Schritt D ausgeführt ist, und wobei
das Steuergerät (1) so ausgeführt ist, dass der Schritt C erst dann ausgeführt wird, wenn zuvor in dem Schritt D festgestellt wurde, dass der erste Soll-Wert (REQ) nicht dem gespeicherten zweiten Soll-Wert (TGT) entspricht.

3. Steuergerät (1) nach Anspruch 1 oder 2, das zudem so ausgeführt ist, dass in einem Schritt E, der insbesondere zeitlich unmittelbar dem Schritt C folgt, das Ausgabemittel den zweiten Soll-Wert (TGT) an den Aktor ausgibt.

4. Steuergerät (1) nach Anspruch 1 oder 2 oder 3, das zudem so ausgeführt ist, dass in einem Schritt F, der insbesondere zeitlich unmittelbar dem Schritt C oder E folgt, der Zähler (6) neu gestartet wird.

5. Steuergerät (1) nach einem der Ansprüche 1 bis 4, das zudem so ausgeführt ist, dass falls in dem Schritt A festgestellt wird, dass die Zeitspanne bereits abgelaufen ist, der Schritt C ausgeführt wird.

6. Steuergerät (1) nach einem der Ansprüche 1 bis 5, mit einem Mittel zum Feststellen in einem Schritt G, ob der erste Soll-Wert (REQ) einem Ausnahmewert (EXE) entspricht,
wobei das Steuergerät (1) zudem so ausgeführt ist, dass falls das Mittel feststellt, dass der erste Soll-Wert (REQ) dem Ausnahmewert (EXE) entspricht, der Schritt C durchgeführt wird.

7. Steuergerät (1) nach einem der vorhergehenden Ansprüche, mit einem Mittel zum Feststellen in einem Schritt H, ob sich der vom Empfangsmittel (3) empfangene erste Soll-Wert (REQ) geändert hat,
wobei das Steuergerät (1) zudem so ausgeführt ist, dass zumindest der Schritt A und/oder Schritt B erst dann ausgeführt wird, wenn das Mittel eine Änderung des empfangenen ersten Soll-Werts (REQ) feststellt.

8. Getriebesteuergerät (1), das nach einem der vorhergehenden Ansprüche ausgeführt ist, wobei der erste, zweite und dritte Soll-Wert (REQ, TGT, MEM) jeweils einem Schaltzustand eines von dem Getriebesteuergerät (1) im Betrieb angesteuerten Getriebes (9) entspricht.

9. Getriebe (9) mit zumindest einem Getriebesteuergerät (1) nach Anspruch 8 und einem Getriebeaktor (2), der so ausgeführt ist, dass er das Getriebe (9) in einen Schaltzustand bringt, der dem vom Getriebesteuergerät (1) ausgegebenen zweiten Soll-Wert (TGT) entspricht.

10. Fahrzeugsteuersystem mit zumindest einem ersten Steuergerät (1) nach einem der Ansprüche 1 bis 8 und einem zweiten Steuergerät (11), das ausgeführt ist eine Vorgabe eines Fahrzeugbedieners in einen Soll-Wert (REQ), welcher der Vorgabe des Fahrzeugbedieners entspricht, umzuwandeln und diesen Soll-Wert (REQ) an das erste Steuergerät (1) auszugeben.

11. Fahrzeugsteuersystem nach Anspruch 10, wobei das erste und zweite Steuergerät (1, 11) so ausgeführt sind, dass diese sich die jeweils ausgegebenen Soll-Werte (REQ, TGT) gegenseitig aufsynchronisieren.

12. Fahrzeugsteuersystem nach Anspruch 10 oder 11, wobei das zweite Steuergerät (11) ein Fahrzeugsteuergerät ist und mit einem zu dem Fahrzeugsteuersystem gehörenden elektronischen Schalthebel (12) verbunden ist, über welchen der Fahrzeugbediener eine gewünschte Übersetzungsstufe für ein mehrstufiges Fahrzeuggetriebe (9) vorgeben kann, wobei das zweite Steuergerät (11) die gewünschte Übersetzungsstufe in einen Soll-Wert (REQ) für das erste Steuergerät (1), welches als Getriebesteuergerät nach Anspruch 7 ausgeführt ist, umwandelt und an dieses ausgibt.
